Europäisches Patentamt

European Patent Office

Office européen des brevets

(19)

(11) Veröffentlichungsnummer: **0 287 941 B1**

## (12) EUROPÄISCHE PATENTSCHRIFT

(45) Veröffentlichungstag der Patentschrift: **27.12.91**

(51) Int. Cl.5: **B62D 29/04**, B62D 23/00

(21) Anmeldenummer: **88105903.4**

(22) Anmeldetag: **13.04.88**

Verbunden mit 88903789.1/0357651
(europäische
Anmeldenummer/Veröffentlichungsnummer)
durch Entscheidung vom 12.06.90.

(54) **Verfahren zum Versteifen des metallischen Chassis, insbesondere der Bodengruppe von Personenkraftwagen.**

(30) Priorität: **18.04.87 DE 3713302**
**28.08.87 DE 3728757**

(43) Veröffentlichungstag der Anmeldung:
**26.10.88 Patentblatt 88/43**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
**EP-A- 0 147 872      EP-A- 0 155 678**
**DE-U- 8 601 811      FR-A- 2 407 116**
**GB-A- 767 248        US-A- 2 931 739**
**US-A- 4 446 092**

**PATENT ABSTRACTS OF JAPAN, Band 10,
Nr. 171 (M-489) [2227], 17. Juni 1986; & JP - A
- 61 20731 (SAKAI KONPOJITSUTO K.K.)
29.01.1986**

(73) Patentinhaber: **Apprich, Harry**
**Steinbeisstrasse 1**
**W-7311 Hochdorf(DE)**

(72) Erfinder: **Apprich, Harry**
**Steinbeisstrasse 1**
**W-7311 Hochdorf(DE)**

(74) Vertreter: **Hoeger, Stellrecht & Partner**
**Uhlandstrasse 14 c**
**W-7000 Stuttgart 1(DE)**

## Beschreibung

Die Erfindung betrifft ein Verfahren zum Versteifen von Hohlräumen im metallischen Chassis, insbesondere in der Bodengruppe von Personenkraftwagen durch Beschichtung mit einer textilen Werkstoffbahn.

Aus der DE-U-86 01 811 ist es bekannt, Chassisteile von Personenkraftwagen mit Hilfe von Werkstoffbahnen, die mit einem aushärtbaren Kunststoff getränkt sind, zu verstärken und zu versteifen. Aus der FR-A-24 07 116 ist es bekannt, Hohlräume in Kraftfahrzeugkarosserien zur Versteifung mit einem expandierbaren Kunstharz, beispielsweise einem schäumbaren Kunstharz, anzufüllen. Um zu verhindern, daß das Kunstharz bei seiner Expansion durch Öffnungen der Hohlräume in unerwünschter Weise austritt, wird in den Hohlraum vorher ein z. B. aus textilem Werkstoff bestehender Sack eingebracht und aufgeblasen, der sich über die Öffnungen legt und diese abdichtet. Anschließend wird in den Sack das expandierende Kunstharz eingebracht. Dabei übt aber der Sack selbst keine Versteifungsfunktion aus, der im übrigen im Hinblick auf seine Gasdichtigkeit nicht saugfähig ist und nicht mit Kunststoff getränkt werden kann.

Es ist Aufgabe der Erfindung, Hohlräume in einem Kraftfahrzeug-Chassis durch Aufbringen von textilen Werkstoffbahnen zu versteifen.

Die Aufgabe wird erfindungsgemäß durch folgende Schritte gelöst:

a) man tränkt die textile Werkstoffbahn mit einem aushärtbaren Kunststoff;

b) man führt die mit dem aushärtbaren Kunststoff getränkte Werkstoffbahn in teilweise eingerolltem Zustand zusammen mit dem expandierbaren Kunstharz in den Hohlraum des Chassis ein;

c) man entrollt die Werkstoffbahn durch Expansion des Kunstharzes und legt sie hierdurch unter Druck formschlüssig an die Innenfläche des Hohlraums an;

d) man läßt den Kunststoff in der textilen Werkstoffbahn unter dem Druck des expandierten Kunstharzes aushärten.

Die nachstehende Beschreibung bevorzugter Ausführungsformen der Erfindung dient im Zusammenhang mit beiliegender Zeichnung der weiteren Erläuterung. Es zeigen:

Figur 1    schematisch die Innenseite eines Kraftfahrzeug-Chassis mit zu versteifenden Hohlräumen;

Figur 2    eine Schnittansicht eines Hohlraums des Chassis und

Figur 3    den ausgekleideten und versteiften Hohlraum.

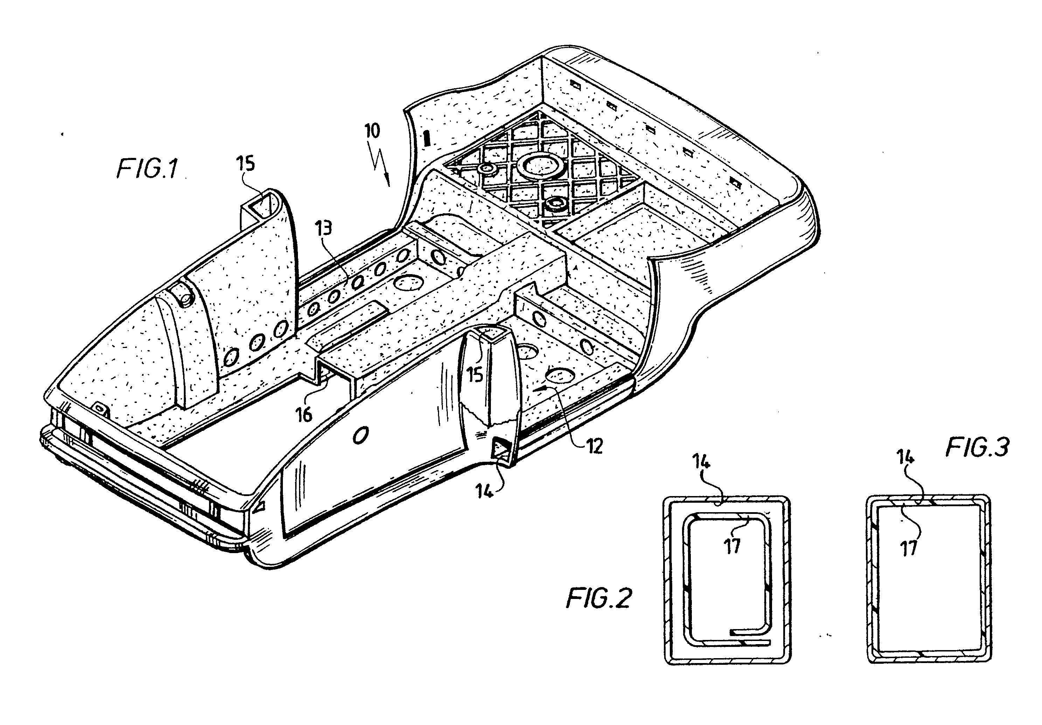

In Figur 1 ist schaubildlich und schematisch die Innenseite eines metallischen Chassis 10, insbesondere der Bodengruppe 12 für einen Personenkraftwagen in Form eines Kabrioletts dargestellt. Die gesamte Innenseite ist mit einer kunststoffgetränkten, versteifenden Werkstoffbahn 13 überzogen.

Wie dargestellt, weist das Chassis 10 Hohlräume, beispielsweise einen im wesentlichen horizontal und parallel zur Längsachse des Chassis verlaufenden Hohlraum 14 im Bereich des Schwellers, zwei etwa vertikal verlaufende Hohlräume 15 im Bereich einer sogenannten "A-Säule" sowie einen nach unten offenen Hohlraum 16 im Bereich des Kardan-Tunnels auf. Weitere solcher Hohlräume können auch an anderer Stelle, beispielsweise im Bereich von B- und C-Säulen vorgesehen sein. Diese Hohlräume sind an mindestens einer, vorzugsweise zwei Stirnseiten offen und somit von außen her zugänglich.

Um derartige Hohlräume mit einer kunstharzgetränkten Werkstoffbahn auszukleiden und hierdurch das Chassis auch im Bereich dieser Hohlräume zu versteifen, geht man folgendermaßen vor: Man tränkt eine auf die Länge des Hohlraums, beispielsweise des Hohlraums 14, abgestimmte, saugfähige, textile Werkstoffbahn 17 mit aushärtbarem Kunststoff, rollt die Bahn entsprechend Figur 2 leicht ein und führt in das Innere der "Rolle" eine Masse aus expandierendem Kunstharz ein. Durch die Expansion des Kunstharzes wird die Werkstoffbahn 17 entrollt und unter Druck formschlüssig an die Innenflächen des Hohlraums angepreßt (Figur 3). Vor Einfüllung eines solchen expandierenden Kunstharzes in das Innere der noch eingerollten Werkstoffbahn 17 wird diese vorzugsweise mit einer Trennfolie ausgekleidet. Man läßt hierauf den Kunststoff unter Druck aushärten.

Dieses Verfahren läßt sich auf ringsum geschlossene Hohlräume, die an beiden Stirnseiten offen sind, wie beispielsweise der Hohlraum 14 im Schwellerbereich, anwenden. Auch nur an einer Stirnseite offene Hohlräume können auf diese Weise mit der Werkstoffbahn 17 ausgkleidet werden. Auch einseitig offene Hohlräume, wie beispielsweise der Kardan-Tunnel 16, können auf diese Weise innwendig ausgekleidet werden.

In Figur 2 ist die Breite der Werkstoffbahn 17 so bemessen, daß die Kanten bündig aneinander liegen. Bei anderen Ausführungsformen können sich die Randbereiche der Werkstoffbahn 17 im auszukleidenden Hohlraum auch ganz oder teilweise überlappen. Der Versteifungsgrad wird hierdurch nicht beeinträchtigt, sondern eher erhöht.

In der Regel wird sich die kunststoffgetränkte Werkstoffbahn 17 mit Unebenheiten und dergleichen an der Innenseite des Hohlraums 14 fest verhaften. Nötigenfalls kann vor Einbringen der Werkstoffbahn auch ein Kleber aufgebracht werden.

Die textile Werkstoffbahn 17 kann aus Aramid-, Polyester-, Polyamid-, Kohle- und/oder Glasfasern bestehen. Sie kann gewebt, gewirkt oder gestrickt sein. Die Fasern der textilen Werkstoffbahn können ferner zur Erhöhung ihrer Saugfähigkeit in Bezug auf den sie durchdringenden Kunststoff chemisch imprägniert sein.

Als fließfähige Kunststoffe, mit denen die Werkstoffbahn 17 getränkt wird, kommen in erster Linie in Frage: Epoxid-, Polyester- oder Polyurethanharze. Die Tränkung der Werkstoffbahn 17 mit dem Kunststoff und die Druckausübung mit Hilfe des expandierenden Kunstharzes auf die kunststoffgetränkte Werkstoffbahn 17 und/oder die Aushärtung des Kunststoffes kann bei Raumtemperatur oder erhöhter Temperatur ausgeführt werden. Der ausgehärtete Kunststoff kann anschließend auch bei erhöhter Temperatur getempert werden.

Als expandierendes Kunstharz kommt in erster Linie ein Kunststoffschaum in Frage. Der Kunststoffschaum bleibt im Inneren der den Hohlraum auskleidenden Werkstoffbahn 17 enthalten.

**Patentansprüche**

1. Verfahren zum Versteifen von Hohlräumen im metallischen Chassis, insbesondere in der Bodengruppe von Personenkraftwagen, durch Beschichtung mit einer textilen Werkstoffbahn und Ausfüllen mit expandierbarem Kunstharz, gekennzeichnet durch folgende Schritte:
   a) man tränkt die textile Werkstoffbahn mit einem aushärtbaren Kunststoff;
   b) man führt die mit dem aushärtbaren Kunststoff getränkte Werkstoffbahn in teilweise eingerolltem Zustand zusammen mit dem expandierbaren Kunstharz in den Hohlraum des Chassis ein;
   c) man entrollt die Werkstoffbahn durch Expansion des Kunstharzes und legt sie hierdurch unter Druck formschlüssig an die Innenflächen des Hohlraums an;
   d) man läßt den Kunststoff in der textilen Werkstoffbahn unter dem Druck des expandierten Kunstharzes aushärten.

2. Verfahren nach Anspruch 1, dadurch gekennzeichnet, daß man die Werkstoffbahn so bemißt, daß sich ihre Ränder im Hohlraum ganz oder teilweise überlappen.

3. Verfahren nach Anspruch 1, dadurch gekennzeichnet, daß man das Innere der eingerollten Werkstoffbahn vor Einfüllung des expandierenden Kunstharzes mit einer Trennfolie auskleidet.

4. Verfahren nach Anspruch 1, dadurch gekennzeichnet, daß man als expandierbares Kunstharz einen Kunststoffschaum verwendet.

5. Verfahren nach Anspruch 1, dadurch gekennzeichnet, daß man einen textilen Werkstoff aus Aramid-, Polyester-, Polyamid-, Kohle- und/oder Glasfasern verwendet.

6. Verfahren nach Anspruch 1, dadurch gekennzeichnet, daß man einen gewebten, gewirkten oder gestrickten Werkstoff verwendet.

7. Verfahren nach Anspruch 1, dadurch gekennzeichnet, daß man die Fasern des textilen Werkstoffes zur Erhöhung ihrer Saugfähigkeit chemisch imprägniert.

8. Verfahren nach Anspruch 1, dadurch gekennzeichnet, daß man als fließfähigen Kunststoff Epoxid-, Polyester- oder Polyurethanharze verwendet.

9. Verfahren nach Anspruch 1, dadurch gekennzeichnet, daß man die Tränkung, Druckausübung und Aushärtung bei Raumtemperatur ausführt.

10. Verfahren nach Anspruch 1, dadurch gekennzeichnet, daß man den ausgehärteten Kunststoff bei erhöhter Temperatur tempert.

11. Verfahren nach Anspruch 1, dadurch gekennzeichnet, daß man zwischen dem mit Kunststoff getränkten, textilen Werkstoff und den Innenflächen des Hohlraums einen Kleber anordnet.

**Claims**

1. A method for strenghtening hollow spaces in a metallic chassis, in particular in the underbody of a private car, by coating them with a length of textile material and filling them with expandable plastic, characterized by the following steps:
   a) the length of textile material is impregnated with a hardenable plastic;
   b) the length of textile material impregnated with the hardenable plastic is introduced in a partly rolled up condition together with the expandable plastic in the cavity in the chassis;
   c) the length of material is unrolled by expansion of the plastic and as a result is applied under pressure in a form-fitting manner on the internal surfaces of the cavity;

d) the plastic in the length of textile material is allowed to harden under the pressure of the expanded plastic.

2. A method according to claim 1, characterized in that the dimensions of the length of material are such that its edges completely or partially overlap inside the cavity.

3. A method according to claim 1, characterized in that the inside of the rolled up length of material is covered with a separation sheet before filling with the plastic to be expanded.

4. A method according to claim 1, characterized in that a plastic foam is used as the expandable plastic.

5. A method according to claim 1, characterized in that a textile material made of fibres of aramide, polyester, polyamide, carbon and/or glass is used.

6. A method according to claim 1, characterized in that a woven or knitted material is used.

7. A method according to claim 1, characterized in that the fibres of the textile material are chemically impregnated to increase their absorbency.

8. A method according to claim 1, characterized in that an epoxide, polyester or polyurethane resin is used as the free-flowing plastic.

9. A method according to claim 1, characterized in that the impregnation, exertion of pressure and hardening are performed at romm temperature.

10. A method according to claim 1, characterized in that the hardened plastic is tempered at a raised temperature.

11. A method according to claim 1, characterized in that an adhesive is disposed between the textile material impregnated with plastic and the internal surfaces of the cavity.

## Revendications

1. Procédé pour la rigidification de volumes creux dans des châssis métalliques, en particulier dans le plancher de voitures particulières, par recouvrement à l'aide d'une bande de matière textile et remplissage par une résine synthétique expansible, caractérisé par les opérations suivantes :

a) on imprègne la bande de matière textile d'une matière plastique durcissable ;
b) on introduit la bande de matière imprégnée de matière plastique durcissable à l'état partiellement enroulé dans le volume creux du châssis avec la résine synthétique expansible ;
c) on déroule la bande de matière par l'expansion de la résine synthétique et on l'applique de cette façon sous pression avec concordance des formes contre la surface intérieure du volume creux ;
d) on laisse durcir la matière plastique contenue dans la bande de matière textile sous la pression de la résine synthétique expansée.

2. Procédé selon la revendication 1, caractérisé en ce qu'on dimensionne la bande de matière de façon que ses bords se chevauchent totalement ou partiellement dans le volume creux.

3. Procédé selon la revendication 1 caractérisé en ce qu'on revêt l'intérieur de la bande de matière enroulée d'une feuille de séparation avant l'introduction de la résine synthétique expansible.

4. Procédé selon la revendication 1, caractérisé en ce qu'on utilise, comme résine synthétique expansible, une mousse de matière plastique.

5. Procédé selon la revendication 1, caractérisé en ce qu'on utilise une matière textile constituée par des fibres d'aramide, de polyester, de polyamide, de carbone et/ou de verre.

6. Procédé selon la revendication 1, caractérisé en ce qu'on utilise une matière tissée, maillée ou tricotée.

7. Procédé selon la revendication 1, caractérisé en ce qu'on imprègne chimiquement les fibres de la matière textile pour augmenter leur pouvoir absorbant.

8. Procédé selon la revendication 1, caractérisé en ce qu'on utilise, comme matière plastique fluide, des résines époxydes, polyesters ou polyuréthanes.

9. Procédé selon la revendication 1, caractérisé en ce qu'on effectue l'imprégnation, l'application de la pression et le durcissement à la température de la pièce.

10. Procédé selon la revendication 1, caractérisé en ce qu'on passe la matière plastique durcie à l'étuve à une température supérieure à la température ambiante.

11. Procédé selon la revendication 1, caractérisé en ce qu'on place un adhésif entre la matière textile imprégnée de matière plastique et la surface intérieure du volume creux.

FIG.1

FIG.2

FIG.3